# EUROPÄISCHE PATENTSCHRIFT

(11) **EP 1 773 554 B1**
(45) Veröffentlichungstag und Bekanntmachung des Hinweises auf die Patenterteilung: **01.10.2008**
(21) Anmeldenummer: 05774423.7
(22) Anmeldetag: 08.08.2005
(51) Int. Cl.: B28C 5/42, F16F 1/44, F16F 1/393

(54) **ANTRIEB FÜR EINE MISCHTROMMEL**
DRIVE FOR A MIXING DRUM
ENTRAINEMENT POUR TAMBOUR MELANGEUR

(30) Priorität: 07.08.2004 DE 102004038504; 07.08.2004 DE 102004038506; 01.12.2004 DE 102004057849; 17.03.2005 DE 102005012823; 23.03.2005 DE 102005014028
(43) Veröffentlichungstag der Anmeldung: 18.04.2007
(73) Patentinhaber: ZF Friedrichshafen AG, 88038 Friedrichshafen (DE)
(72) Erfinder: HEILIG, Eduard, 88048 Friedrichshafen (DE); GEIER, Andreas, 94118 Jandelsbrunn (DE); SCHIFFNER, Klaus, 53474 Bad Neuenahr-Ahrweiler (DE); FRONDORF, Michael, 53783 Eitorf (DE); KRAKOWSKI, Robert, 53359 Rheinbach (DE)
(86) Internationale Anmeldenummer: PCT/EP2005/008582
(87) Internationale Veröffentlichungsnummer: WO 2006/015833

(56) Entgegenhaltungen:
- DE-A1- 2 341 250
- DE-B- 1 182 125
- FR-A- 2 146 053
- GB-A- 668 010

## Beschreibung

Die Erfindung bezieht sich auf einen Antrieb für eine Mischtrommel, insbesondere eines Fahrmischers, nach der im Oberbegriff von Anspruch 1 näher definierten Art (offenbart durch DE-B-23 41 250).

Gattungsgemäße Antriebe werden verwendet, um die Mischtrommel in der Drehrichtung "Einziehen" und in der Drehrichtung "Entleeren" anzutreiben und zusätzlich Gewichtskräfte der Trommel aufzunehmen und an einen Lagerbock, welcher mit Rahmenteilen des Fahrzeugs verbunden ist, weiterzuleiten. Bei Fahrten in unebenem Gelände verformt man sich die Rahmenteile dergestalt, dass ein Fehlwinkel zwischen der Trommel und dem Lagerbrock auftritt, welcher über den Antrieb auszugleichen ist. Es gibt Fahrmischer mit unterschiedlichen Trommelgrößen, welche unterschiedliche Einbauwinkel aufweisen, wodurch die Oberflächen der Lagerböcke an diese unterschiedlichen Einbauwinkel angepaßt sein müssen.

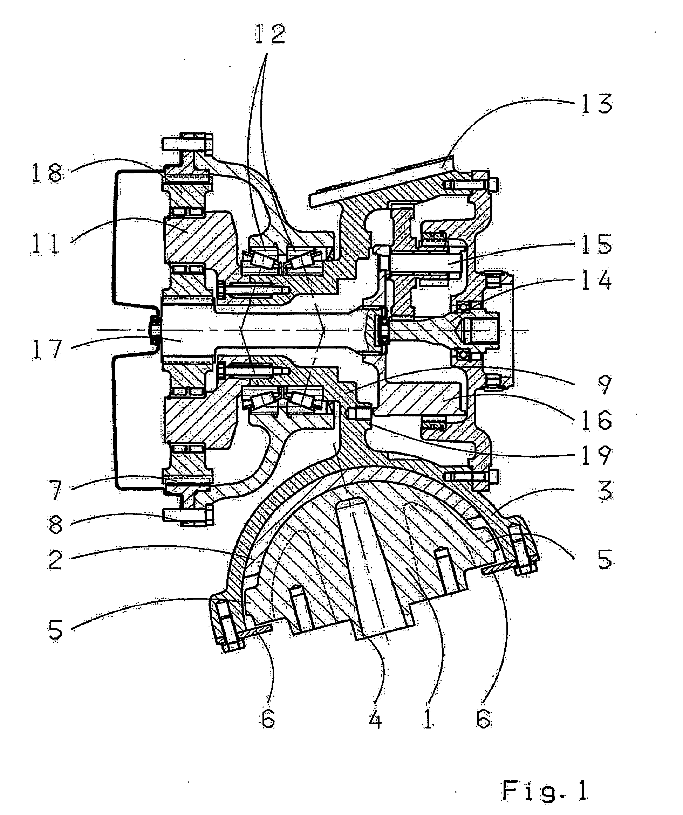

Die EP 0 186 390 A2 offenbart ein hydrostatisch-mechanisches Getriebe zum Antrieb einer Mischtrommel, bei welchem ein langsamlaufender Motor ein inneres Zentralrad eines Planetengetriebes antreibt, dessen äußeres Zentralrad die Mischtrommel antreibt. Der Fehlwinkel zwischen dem Lagerbock und der Mischtrommel wird nach der Figur über ein Pendelrollenlager ausgeglichen.

Der vorliegenden Erfindung liegt die Aufgabe zugrunde, einen Antrieb für eine Mischtrommel eines Fahrmischers zu schaffen, welcher für unterschiedliche Trommel-Einbauwinkel geeignet und betriebssicher ausgeführt ist.

Die Aufgabe wird mit einem, auch die kennzeichnenden Merkmale des Hauptanspruchs aufweisenden, gattungsgemäßen Antrieb gelöst.

Erfindungsgemäß weist der Antrieb ein elastisches Element auf, welches so mit dem Gehäuse des Antriebs zusammenwirkt, dass Fehlwinkel der Mischtrommel zum Lagerbock ausgeglichen werden.

In einer weiteren Ausgestaltungsform ist das elastische Element sphärisch ausgestaltet und zwischen einem inneren Bauteil und einem äußeren Bauteil angeordnet. Dadurch ist es möglich, das äußere Bauteil zum inneren Bauteil bei der Montage des Antriebs im Fahrmischer zu verschieben und so den unterschiedlichen Einbauwinkel der Trommel zu realisieren. Es ist dadurch nicht mehr notwendig, Lagerböcke mit unterschiedlich geneigten Oberflächen zu verwenden.

In einer weiteren Ausgestaltungsform ist das elastische Element mit einer kreisbogenförmigen Oberfläche ausgebildet und mit dem inneren Bauteil ortsfest verbunden. Im unbelasteten Zustand läßt sich das äußere Bauteil zum inneren Bauteil verschieben. Im belasteten Zustand ist die Haftreibung zwischen dem äußeren Bauteil und dem elastischen Element so groß, das das elastische Element zum Ausgleich der Fehlwinkel der Trommel zum Lagerbock, hervorgerufen durch Fahrt in unebenem Gelände, elastisch verformt wird.

In einer weiteren Ausgestaltungsform weist das innere Bauteil oder das äußere Bauteil Anschlagmittel auf, wodurch die elastische Verformung des elastischen Bauteils begrenzt wird. Da das äußere Bauteil das elastische Element und das innere Bauteil nicht nur die Gewichtskräfte der Trommel übertragen müssen, sondern auch das Drehmoment, welches zum Antrieb der Trommel benötigt wird, über diese Bauteile aufzunehmen, weist das äußere Bauteil zusätzliche Anschlagmittel auf, welche ein Abheben des äußeren Bauteils vom inneren Bauteil verhindern.

In einer weiteren Ausgestaltungsform weist das innere Bauteil eine Zentrierung auf, welche in eine Aufnahme des Lagerbocks eingreift, wodurch das innere Bauteil im Lagerbock einen zusätzlichen Anschlag erhält. Das innere Bauteil ist über Verbindungselemente mit dem Lagerbock verbunden. Das äußere Bauteil kann einstückig mit dem Gehäuse des Antriebs verbunden sein, es besteht jedoch auch die Möglichkeit, das äußere Bauteil mit dem Gehäuse des Antriebs über Verbindungsmittel zu verbinden. Das elastische Bauteil kann aus einem Elastomer, welches auf dem inneren Bauteil aufvulkanisiert ist, hergestellt sein.
Durch die kugelförmige Ausbildung des elastischen Bauteils erhält der Antrieb die geforderte Bewegungsfreiheit in mehreren Bewegungsachsen, wobei die Kräfte, sowohl aus Gewichtskraft als auch aus dem Drehmoment, über die Kugelform optimal aufgenommen werden können, da die Kugelform sowohl vertikale Auflageflächen sowie seitliche Flächen zur Aufnahme der Hauptkräfte aufweist.

Weitere Merkmale sind der Figuren-Beschreibung zu entnehmen.

Die einzige Figur zeigt ein inneres Bauteil 1, welches über ein elastisches Bauteil 2 mit einem äußeren Bauteil 3 in Verbindung steht. Das elastische Bauteil 2 weist eine kugelförmige Oberfläche auf und ist ortsfest mit dem inneren Bauteil 1 verbunden. Das innere Bauteil 1 ist mit einem nicht gezeigten Lagerbock verbunden und weist eine Zentrierung 4 auf, welche in eine Aufnahme des Lagerbocks eingreift, um einen mechanischen Anschlag zu schaffen. Das innere Bauteil 1 weist Anschlagmittel 5 auf, welche die Bewegung zwischen dem inneren Bauteil 1 und dem äußeren Bauteil 3 begrenzen. Weitere Anschlagmittel 6 sind am äußerem Bauteil 3 befestigt, um ein Abheben des äußeren Bauteils 3 vom inneren Bauteil 1 zu verhindern. Ein äußeres Zentralrad 7 ist mit einem Abtriebsflansch verbunden, welcher eine nicht gezeigte Mischtrommel antreibt. Bei Fehlwinkel zwischen der Mischtrommel, und somit dem Abtriebsflansch, und dem Lagerbock, und somit dem inneren Bauteil 1, verformt sich das elastische Element 2, um diese Fehlwinkel auszugleichen. Bei unterschiedlichem Einbauwinkel der Trommel zum Lagerbock wird das innere Bauteil 1 einmalig zum äußeren Bauteil 3 bei der Montage ausgerichtet und verbleibt, bis auf die elastische Verformung des elastischen Bauteils 2, in dieser Position. Das äußere Bauteil ist einstückig mit einem Gehäuse 9 verbunden, welches ein rohrförmiges Element 10 aufweist, welches einerseits mit einem Planetenträger 11 verbunden ist und andererseits die Lagerung 12 trägt. Die Gewichtskräfte der Trommel werden in die Lagerung 12 eingeleitet und stützen sich im Gehäuse 9 ab, welche diese Kräfte auf das äußere Bauteil 3 überträgt. Das Gehäuse 9 weist eine Auflage 13 auf, an welcher beispielsweise ein Wassertank befestigt werden kann. Ein nicht gezeigter Antriebsmotor treibt ein inneres Zentralrad 14 einer Planetenstufe 15 an, dessen Planetenträger 16 ein inneres Zentralrad 17 antreibt, welches über Planeten 18 das äußere Zentralrad 7 antreibt. Der nicht gezeigte Antriebsmotor ist ein schnelllaufender Axialkolben-Hydromotor. Bei Verwendung eines außen abgestützten, langsamlaufenden Radialkolbenmotors wird die Planetenstufe 15 entfernt, die Kurvenscheibe des Radialkolbenmotors an der Anlage 19 befestigt und der Rotor des Radialkolbenmotors treibt das innere Zentralrad 17 an.

In einer weiteren Ausgestaltungsform ist das elastische Bauteil 2 mit dem äußeren Bauteil 3 und dem inneren Bauteil 1 verbunden, vorzugsweise aufvulkanisiert, wobei die Elastizität des elastischen Bauteils 2 so ausgeführt ist, dass Fehlwinkel aus der Verwindung des Fahrgestells des Fahrzeugs und Winkelunterschiede aus dem Einbauwinkel der Trommel über das elastische Bauteil aufgenommen werden. Dabei ist der Abstand vom weiteren Anschlag mittel 6 zum inneren Bauteil 2 so auszuführen, dass diese Winkelbewegungen möglich sind. Das äußere Bauteil 3 und das Gehäuse 9 können hierbei mehrstückig oder einstückig ausgeführt sein.

### Bezugszeichen

- 1: inneres Bauteil
- 2: elastisches Bauteil
- 3: äußeres Bauteil
- 4: Zentrierung
- 5: Anschlagmittel
- 6: weitere Anschlagmittel
- 7: äußeres Zentralrad
- 8: Abtriebsflansch
- 9: Gehäuse
- 10: rohrförmiges Bauteil
- 11: Planetenträger
- 12: Lagerung
- 13: Auflage
- 14: inneres Zentralrad
- 15: Planetenstufe
- 16: Planetenträger
- 17: inneres Zentralrad
- 18: Planeten
- 19: Anlage

## Patentansprüche

1. Antrieb für eine Mischtrommel eines Fahrmischers, bei welchem ein Antriebsmotor über einen Abtriebsflansch (8) eine Mischtrommel antreibt, welche drehbar über eine Lagerung (12) gelagert ist, wobei die Lagerung (12) mit einem Gehäuse (9) in Verbindung steht, welches die Lagerkraft aufnimmt, wobei das Gehäuse (9) mit einem Lagerbock in Verbindung steht, auf welchem sich der Antrieb abstützt, **dadurch gekennzeichnet, dass** das Gehäuse (9) über ein elastisches Element (2) mit dem Lagerbock in Verbindung steht, wodurch Fehlwinkel der Mischtrommel zum Lagerbock ausgeglichen werden, indem sich das elastische Element (2) verformt, wobei das elastische Element (2) mindestens eine sphärische Fläche aufweist.

2. Antrieb nach Anspruch 1, **dadurch gekennzeichnet, dass** das elastische Element (2) zwischen einem äußeren Bauteil (3) und einem inneren Bauteil (1) angeordnet ist, wobei das äußere Bauteil (3) an seiner Innenfläche sphärisch ausgebildet ist und das innere Bauteil (1) an seiner Außenfläche sphärisch ausgebildet ist.

3. Antrieb nach Anspruch 2, **dadurch gekennzeichnet, dass** die sphärische Fläche kugelförmig ausgebildet ist.

4. Antrieb nach Anspruch 1, **dadurch gekennzeichnet, dass** das elastische Element (2) mit dem inneren Bauteil (1) ortsfest verbunden und im lastfreien Zustand im äußeren Bauteil (3) verschiebbar angeordnet ist.

5. Antrieb nach Anspruch 1, **dadurch gekennzeichnet, dass** das innere Bauteil (1) Anschlagmittel (5) aufweist, welche die elastische Verformung des elastischen Bauteils (2) begrenzen.

6. Antrieb nach Anspruch 5, **dadurch gekennzeichnet, dass** die Anschlagmittel (5) zur Begrenzung der elastischen Bewegung am äußeren Bauteil anstehen.

7. Antrieb nach Anspruch 1, **dadurch gekennzeichnet, dass** das innere Bauteil (1) am Lagerbock befestigt ist.

8. Antrieb nach Anspruch 7, **dadurch gekennzeichnet, dass** das innere Bauteil (1) eine Zentrierung (4) aufweist, welche in eine Ausnehmung des Lagerbocks eingreift.

9. Antrieb nach Anspruch 1, **dadurch gekennzeichnet, dass** das äußere Bauteil (3) mit dem Gehäuse (9) verbunden oder einstückig mit diesem ausgebildet ist.

10. Antrieb nach Anspruch 1, **dadurch gekennzeichnet, dass** das Gehäuse (9) einen rohrförmigen Abschnitt (10) aufweist, auf welchem die Lagerung (12) angeordnet ist.

11. Antrieb nach Anspruch 1, **dadurch gekennzeichnet, dass** der Abtriebsflansch (8) mit einem äußeren Zentralrad (7) eines Planetengetriebes in Verbindung steht, dessen Planetenträger (11) mit dem Gehäuse (9) verbunden ist.

12. Antrieb nach Anspruch 1, **dadurch gekennzeichnet, dass** am äußeren Bauteil (3) weitere Anschlagmittel (6) angeordnet sind, welche ein Abheben des äußeren Bauteils (3) vom elastischen Element (2) verhindern.

## Claims

1. Drive for a mixing drum of a truck mixer, in which a drive motor drives a mixing drum via an output flange (8), with the mixing drum being pivotably supported on a mount (12), with the mount (12) being connected to a housing (9) which supports the mount load, with the housing (9) being connected to a bearing bracket, on which the drive is supported, **characterized in that** the housing (9) is connected to the bearing bracket via an elastic element (2), as a result of which angle errors of the mixing drum relative to the bearing bracket are compensated through deformation of the elastic element (2), with the elastic element (2) featuring at least one spherical surface.

2. Drive according to claim 1, **characterized in that** the elastic element (2) is arranged between an outer component (3) and an inner component (1), with the outer component (3) featuring a spherical inner surface and the inner component (1) featuring a spherical outer surface.

3. Drive according to claim 2, **characterized in that** the spherical surface is ball-shaped.

4. Drive according to claim 1, **characterized in that** the elastic element (2) is immovably connected to the inner component (1) and in the load-free condition is displaceably arranged in the outer component (3).

5. Drive according to claim 1, **characterized in that** the inner component (1) features lashing means (5) limiting the elastic deformation of the elastic component (2).

6. Drive according to claim 5, **characterized in that** the lashing means (5) limiting elastic movement are on the outer component.

7. Drive according to claim 1, **characterized in that** the inner component (1) is mounted to the bearing bracket.

8. Drive according to claim 7, **characterized in that** the inner component (1) features a centralizer (4) which engages with a recess of the bearing bracket.

9. Drive according to claim 1, **characterized in that** the outer component (3) is connected to the housing (9) or forms a single piece with it.

10. Drive according to claim 1, **characterized in that** the housing (9) features a tube-shaped section (10), on which the mount (12) is arranged.

11. Drive according to claim 1, **characterized in that** the output flange (8) is connected to an outer center gear (7) of a planetary transmission, whose planet carrier (11) is connected to the housing (9).

12. Drive according to claim 1, **characterized in that** further lashing means (6) are arranged on the outer component (3) preventing the outer component (3) from lifting off the elastic component (2).

## Revendications

1. Entraînement d'un tambour mélangeur d'une bétonnière, dans lequel un moteur d'entraînement entraîne par l'intermédiaire d'une bride de sortie (8) un tambour mélangeur, celui-ci étant logé en rotation à l'aide d'un support (12), sachant que le support (12) est lié à un carter (9), celui-ci absorbant la force d'appui, sachant que le carter (9) est lié à un support de palier, sur lequel est logé l'entraînement, **caractérisé en ce que** le carter (9) est lié à l'aide d'un élément élastique (2) au support de palier, au moyen duquel des erreurs d'angle du tambour mélangeur par rapport au support de palier sont componsées, et cela par déformation de l'élément élastique (2), sachant que l'élément élastique (2) comporte au moins une surface sphérique.

2. Entraînement selon la revendication 1, **caractérisé en ce que** l'élément sphérique (2) est disposé entre un élément extérieur (3) et un élément intérieur (1), sachant que la surface intérieure de l'élément extérieur (3) est réalisée en forme sphérique et que la surface extérieure de l'élément intérieur (1) est réalisée en forme sphérique.

3. Entraînement selon la revendication 2, **caractérisé en ce que** la surface sphérique est conçue de façon sphérique.

4. Entraînement selon la revendication 1, **caractérisé en ce que** l'élément élastique (2) est lié de manière fixe à l'élément intérieur (1) et **en ce que** dans l'état sans charge est disposé de manière coulissante dans l'élément extérieur (3).

5. Entraînement selon la revendication 1, **caractérisé en ce que** l'élément intérieur (1) comporte des moyens de butée (5), ceux-ci limitant la déformation élastique de l'élément élastique (2).

6. Entraînement selon la revendication 5, **caractérisé en ce que** les moyens de butée (5) sont ont contact avec l'élément extérieur pour limiter la déformation élastique.

7. Entraînement selon la revendication 1, **caractérisé en ce que** l'élément intérieur (1) est fixé au support de palier.

8. Entraînement selon la revendication 7, **caractérisé en ce que** l'élément intérieur (1) comporte un centrage (4), celui-ci s'engageant dans un évidement du support de palier.

9. Entraînement selon la revendication 1, **caractérisé en ce que** l'élément extérieur (3) est lié au carter (9) ou réalisé en une seule pièce avec celui-ci.

10. Entraînement selon la revendication 1, **caractérisé en ce que** le carter (9) comporte une section tubulaire (10), sur laquelle est disposé le support (12).

11. Entraînement selon la revendication 1, **caractérisé en ce que** la bride de sortie (8) est liée à une roue centrale extérieure (7) d'une boîte épicycloïdale, dont l'arbre porte-satellites (11) est lié au carter (9).

12. Entraînement selon la revendication 1, **caractérisé en ce que** sur l'élément extérieur (3) sont disposés d'autres moyens de butée (6), ceux-ci évitant un décollement de l'élément extérieur (3) de l'élément élastique (2).
